# NEUE EUROPÄISCHE PATENTSCHRIFT

(11) **EP 0 864 453 B2**
(45) Veröffentlichungstag und Bekanntmachung des Hinweises auf die Entscheidung über den Einspruch: **20.08.2008**
(45) Hinweis auf die Patenterteilung: 09.01.2002
(21) Anmeldenummer: 98104218.7
(22) Anmeldetag: 10.03.1998
(51) Int. Cl.: B60G 11/27, F16F 9/05

(54) **Luftfeder für Luftfederachsen**
Air spring for axles with pneumtic springs
Ressort pneumatique pour essieux à suspension pneumatique

(30) Priorität: 15.03.1997 DE 19710849
(43) Veröffentlichungstag der Anmeldung: 16.09.1998
(73) Patentinhaber: BPW Bergische Achsen Kommanditgesellschaft, 51674 Wiehl (DE)
(72) Erfinder: Ebert, Jörg, Dr., 50858 Köln (DE)
(74) Vertreter: Christophersen, Ulrich Rudolf

(56) Entgegenhaltungen:
- EP-A- 0 296 445
- EP-A- 0 351 678
- AT-B- 277 781
- DE-A- 3 907 462
- DE-A- 4 213 676
- DE-U- 8 529 304
- US-A- 3 897 941
- US-A- 4 506 910
- US-A- 4 798 369
- US-A- 4 923 210
- US-A- 4 946 144

## Beschreibung

Die Erfindung betrifft eine Luftfeder für Luftfederachsen entsprechend dem Oberbegriff vom Anspruch 1.

Aus der DE 31 47 231 C1 ist eine Luftfeder bekannt, deren Tauchkolben längslenkerseitig mit einer Bodenplatte verschlossen ist. Die Bodenplatte kann einerseits durch Verschrauben mit dem Längslenker verbunden sein und andererseits auch durch Verschrauben mit dem Tauchkolben verbunden sein. Diese Luftfedern haben sich in der Praxis zwar durchaus bewährt, jedoch müssen die in der Regel die massiv ausgebildeten Bodenplatten sowie der Tauchkolben mit exakten Führungsflächen ausgebildet sein, um im zusammenmontierten Zustand einen feuchtigkeits- und schmutzdichten Abschluß zwischen Tauchkolben und Bodenplatte zu gewährleisten. Nachteilig bei dem bekannten Tauchkolben ist, daß eine Mindestdicke der Scheibe erforderlich ist, um im Bereich des Kraftflusses um die Anlenkpunkte und Kontaktflächen mit dem Längslenker die ausreichende Festigkeit und Stabilität der Bodenplatte und somit des gesamten Tauchkolbens zu gewährleisten. Dies bedeutet die Anordnung einer großen Masse im Bereich der ungefederten Massen des Achsaggregats. Darüber hinaus können schon geringe Undichtigkeiten im Übergangsbereich Tauchkolben/Bodenplatte dazu führen, daß Feuchtigkeit in das Innere des Tauchkolbens eindringt und zu einer erhöhten Korrosionsbeanspruchung führt. Zur Vermeidung dieser erhöhten Korrosionsbeanspruchung sind zusätzliche Korrosionsschutzmaßnahmen bzw. der Einsatz höherwertiger, korrosionsbeständiger Werkstoffe erforderlich.

Eine gattungsgemäße Luftfeder ist aus der DE 42 13 676 A1 bekannt. In den aus Kunststoff bestehenden Tauchkolben ist eine Platte eingesetzt bzw. eingearbeitet, an der abgewinkelt eine vertikale Stütze ausgebildet ist. Während sich die Platte unmittelbar auf dem Längslenker abstützt, befindet sich die Stütze bündig in einer leicht konischen Aufnahme des Tauchkolbens, so daß sich mittels der Stütze die bei unbetätigter Luftfeder hohen mechanischen Kräfte auf direktem Wege in den Längslenker ableiten lassen. Indem die Stütze nicht mittig, sonder exzentrisch in dem Tauchkolben angeordnet ist, läßt sich dieser in verschiedenen Positionen an dem abzufedernden Fahrzeugteil befestigen.

Der Erfindung liegt die **Aufgabe** zugrunde, eine Luftfeder für Luftfederachsen der eingangs genannten Art zu schaffen, die einfach aufgebaut und kostengünstig herstellbar ist und darüber hinaus die voranstehend genannten Nachteile überwindet.

Die technische **Lösung** sieht die Merkmale aus Auspruch 1 vor.

Mit der erfindungsgemäß ausgebildeten Luftfeder kann auf die aus der DE 31 47 231 C1 bekannte Bodenplatte verzichtet werden, weshalb aufgrund des fehlenden Arbeitsschrittes des Verbindens der Bodenplatte mit dem Tauchkolben die Montage der Luftfeder einfach und kostengünstig durchführbar ist. Darüber hinaus bedeutet der Verzicht auf die aus dem Stand der Technik bekannte Bodenplatte eine Reduzierung der ungefederten Massen des Achsaggregats, wodurch die Nutzlast eines mit einer solchen Luftfeder ausgerüsteten Fahrzeugs erhöht werden kann.

Die nach unten offene Ausgestaltung des Tauchkolbens ermöglicht einen vollständigen Luftaustausch im Inneren des Tauchkolbens und vermeidet damit die Bildung einer für dortige teile eventuell korrosionsfördernden Atmosphäre.

Der mit einer Verrippung in Form einer Vielzahl im wesentlichen radialer Stege versehene Tauchkolben besteht aus Kunststoff und vorzugsweise glasfaserverstärktem Kunststoff. Solche Kunststoffe zeichnen sich dadurch aus, daß sie bei einem geringen Eigengewicht und hoher Korrosionsbeständigkeit gute Festigkeits- und Stabilitätseigenschaften aufweisen. Im übrigen kann der Tauchkolben z. B. als Strangpreßprofil ausgebildet sein, was sich in der Praxis als besonders vorteilhaft herausstellt, da dann das Profil als "Meterware" produziert werden kann, von welcher nachfolgend Profilabschnitte in jeder gewünschten Länge abgetrennt werden können. Auf diese Weise lassen sich Tauchkolben unterschiedlicher Länge fertigungstechnisch sehr einfach herstellen. Alternativ ist der Tauchkolben auch als Spritzgußteil herstellbar. Diese Ausgestaltung des Tauchkolbens erlaubt auch die Herstellung von Profilen mit konischen Flächen sowie die Ausbildung von Absätzen und Einkerbungen am Profil des Tauchkolbens.

In das Kunststoffmaterial des Tauchkolbens ist längslenkerseitig erfindungsgemäß eine Halteplatte eingesetzt, vorzugsweise eine Guß- oder Schmiedeplatte. Diese Halteplatte nimmt die Befestigungsmittel zum Festlegen des Tauchkolbens am Längslenker auf.

Bei einer praktischen Ausführungsform weist der Tauchkolben ein im Querschnitt fertigungstechnisch optimiertes Profil mit einer kreisringförmigen Mantelfläche und einem zentralen Stützkörper auf, wobei Stützkörper und Mantelfläche über die im wesentlichen radial verlaufenden Stege miteinander verbunden sind. Durch eine solche Ausgestaltung ist es möglich, die Materialstärke des den Tauchkolben bildenden Profils entsprechend den an den jeweiligen Stellen auftretenden Belastungen anzupassen. Da der Tauchkolben einen zentralen Stützkörper zur Aufnahme der Auflagekräfte bei vollständig entlüfteter Luftfeder aufweist, kann die Mantelfläche des Tauchkolbens mit einer nur geringen Wanddicke ausgebildet sein, da diese keine Stützkräfte übernehmen muß. Die zylindrische Mantelfläche dient ausschließlich als Abrollfläche für den Rollbalg.

In das Tauchkolbenprofil ist ein zentraler Stützkörper zur Aufnahme der Gewichtskräfte bei entlüfteter Luftfeder einsetzbar.

Zum Festlegen des Rollbalges am Tauchkolben sowie zum luftdichten Verschließen des Rollbalgs ist auf dem rollbalgseitigen Ende des Tauchkolbens ein Deckel angeordnet.

Weitere Einzelheiten und Vorteile der Erfindung ergeben sich aus der nachfolgenden Beschreibung der zugehörigen Zeichnung, in der ein Ausführungsbeispiel eines Tauchkolbens für eine erfindungsgemäß ausgebildete Luftfeder dargestellt ist. In der Zeichnung zeigt:
Fig. 1 eine Prinzipskizze einer Luftfederachse in teilweise eingefederter Lage;
Fig. 2a eine perspektivische Ansicht eines Tauchkolbens;
Fig. 2b eine Ansicht von unten des Tauchkolbens gemäß Fig. 2a und
Fig. 2c einen Schnitt entlang der Schnittline llc-llc gemäß Fig. 2b.

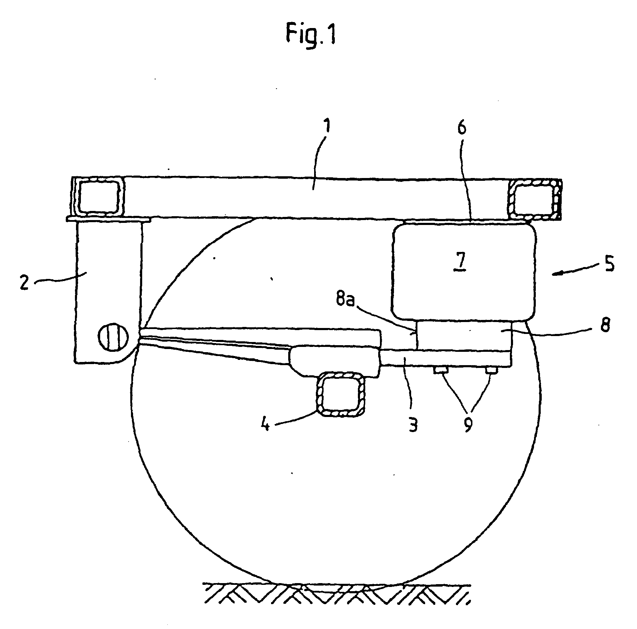

Bei der in Fig. 1 dargestellten Luftfederachse ist zwischen einem Teil eines Fahrzeugrahmens 1 und einem über eine Konsole 2 schwenkbar angelenkten Längslenker 3 für einen Achskörper 4 eine Luftfeder 5 eingebaut.

Die Luftfeder 5 besteht im Prinzip aus einem am Fahrzeugrahmen 1 befestigten Deckel 6, einem Rollbalg 7 und einem am Längslenker festgelegten Tauchkolben 8. Deckelseitig ist der Rollbalg 7 beispielsweise über einen (nicht dargestellten) Sprengring lösbar am Deckel 6 befestigt. Der Tauchkolben 8 mit seiner als Abrollfläche für den Rollbalg 7 dienenden zylindrischen Mantelfläche 8a ist über Befestigungsmittel 9 am rückwärtigen Ende des Längslenkers 3 befestigt.

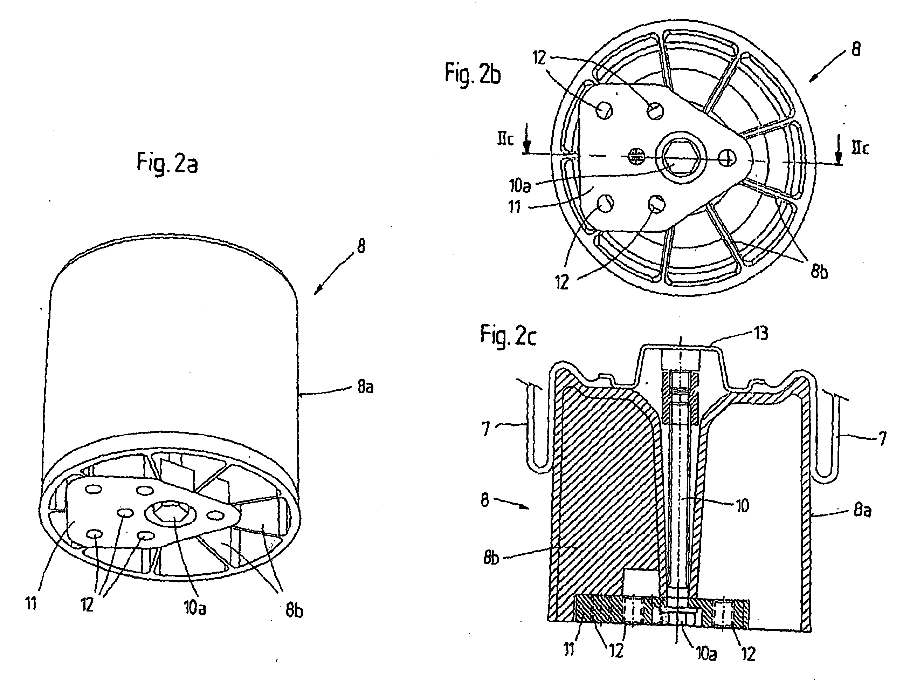

Der Aufbau einer Ausführungsform des Tauchkolbens 8 ist in den Abbildungen Fig. 2a bis 2c dargestellt. Hierbei ist der Tauchkolben 8 als Spritzgußteil ausgebildet. Wie insbesondere aus den Abbildungen Fig. 2a und 2b ersichtlich, weist der Tauchkolben 8 eine dünnwandige, kreisringförmige Mantelfläche 8a auf, von der aus sich eine Vielzahl von Stegen 8b zur Mitte des Tauchkolbens 8 hin erstrecken. Zur Aufnahme der Gewichtskräfte bei entlüfteter Luftfeder 5 ist in das Tauchkolbenprofil ein zentraler Stützkörper 10 einsetzbar, wie dies insbesondere aus Fig. 2c ersichtlich ist. Die Verwendung dieses Stützkörpers 10 vermeidet, daß die Gewichtskräfte des Fahrzeugrahmens 1 bei entlüfteter Luftfeder 5 auf den dünnwandig ausgebildeten Tauchkolben 8 wirken.

Zur Aufnahme der Befestigungsmittel 9 zum Festlegen des Tauchkolbens 8 am Längslenker 3 ist in das längslenkerseitige Ende des Tauchkolbens 8 eine Halteplatte 11 eingesetzt bzw. eingearbeitet, die Gewindebohrungen 12 zur Aufnahme der als Schrauben ausgebildeten Befestigungsmittel 9 aufweist. Tauchkolbenseitig ist der Rollbalg 7 über einen einvulkanisierten Deckel 13 verschlossen, der darüber hinaus zum Festlegen des Rollbalgs 7 am-Tauchkolben 8 dient. Die Halteplatte 11 und der Deckel 13 sind über den als Gewindestange ausgebildeten Stützkörper 10 miteinander und somit auch mit dem Tauchkolben 8 verbunden. Um eine ebene Auflagefläche auf dem Längslenker 3 zu erhalten, ist ein Kopf 10a des Stützkörpers 10 im fertigmontierten Zustand bündig in der Halteplatte 11 versenkt. Zum Festlegen des Tauchkolbens 8 in verschiedenen Stellungen auf dem Längslenker 3 ist die Halteplatte 11 mit einer Mehrzahl von Gewindebohrungen 12 versehen.

Der dargestellte Tauchkolben zeichnet sich dadurch aus, daß dieser direkt, d.h. ohne Zwischenschaltung der aus dem Stand der Technik bekannten Abschlußplatte auf dem rückwärtigen Ende des Längslenkers 3 festlegbar ist. Die nach unten offenen Tauchkolbenprofile weisen darüber hinaus den Vorteil auf, daß aufgrund der fehlenden Abschlußplatte ein ständiger Luftaustausch im Tauchkolbenprofil stattfinden kann, so daß sich keine korrosionsfördernde Atmosphäre im Inneren des Tauchkolbens 8 bilden kann.

## Patentansprüche

1. Luftfeder für Luftfederachsen mit einem fahrestellfesten Decken (6) und einem auf einem rückwärtigen Ende eines Längslenkers (3) festgelegten Tauchkolben (8) sowie einem zwischen Deckel (6) und Tauchkolben (8) angeordneten Rollbalg (7), wobei der aus Kunststoffmaterial, vorzugsweise glasfaserverstärktem Kunststoffmaterial, bestehende Tauchkolben (8) nach unten offen ausgebildet auf dem Längslenker festlegbar ist und eine Mantelfläche (8a) aufweist, von der aus sich Stege (8b) im wesentlichen radial zur Mitte des Tauchkolbens (8) hin erstrecken, wobei längslenkerseitig in den Tauchkolben eine Halteplatte (11) zur Aufnahme von Befestigungsmitteln (9) zum Festlegen des Tauchkolbens (8) am Längslenker (3) eingesetzt bzw. eingearbeitet ist,
**dadurch gekennzeichnet,**
**daß** der Rollbalg (7) durch einen auf dem rollbalgseitigen Ende des Tauchkolbens (8) angeordneten Deckel (13) am Tauchkolben (8) festlegbar ist, daß zur Aufnahme der Gewichtskräfte bei entlüfteter Luftfeder ein zentraler Stützkörper (10) in das Tauchkolbenprofil eingesetzt ist, der Deckel (13) und Halteplatte (11) miteinander verbindet, und daß der Tauchkolben (8) direkt auf dem Längslenker (3) derart festlegbar ist, daß die Unterseite der Halteplatte (11) und die dem Längslenker zugewandten Stirnflächen der Mantelfläche (8a) und der Stege (8b) eine Ebene bilden.

2. Luftfeder nach Anspruch 1, **dadurch gekennzeichnet, daß** der Tauchkolben (8) als Strangpreßprofil ausgebildet ist.

3. Luftfeder nach Anspruch 1, **dadurch gekennzeichnet, daß** der Tauchkolben (8) als Gußteil, vorzugsweise Spritzgußteil ausgebildet ist.

## Claims

1. Pneumatic spring for pneumatic-spring axles, with a cover (6) fixed to the chassis and with a plunger piston (8) secured to a rear end of a longitudinal link (3), and also with a concertina (7) arranged between the cover (6) and the plunger piston (8), the plunger piston (8), which consists of plastic, preferably glass-fibre-reinforced plastic, being capable of being secured, downwardly open, to a longitudinal link and having an outer surface (8a), from which webs (8b) extend essentially radially towards the centre of the plunger piston (8), a holding plate (11) for receiving fastening means (9) for securing the plunger piston (8) to the longitudinal link (3) being inserted or worked into the plunger piston on the longitudinal-link side, **characterized in that** the concertina (7) is capable of being secured to the plunger piston (8) by means of a cover (13) arranged on the concertina-side end of the plunger piston (8), that, for absorbing the weight forces when the pneumatic spring is vented, a central supporting body (10) is capable of being inserted into the plunger-piston profile, with said supporting body (10) connecting the cover (13) and the holding plate (11) to one another, that the plunger piston (8) is capable of being secured directly to the longitudinal link (3), in such a way that the underside of the holding plate (11) and the end faces, confronting the longitudinal link, of the outer surface (8a) and of the webs (8b) form one plane.

2. Pneumatic spring according to Claim 1, **characterized in that** the plunger piston (8) is produced as an extruded profile.

3. Pneumatic spring according to Claim 1, **characterized in that** the plunger piston (8) is produced as a casting, preferably injection moulding.

## Revendications

1. Ressort pneumatique pour essieux à suspension pneumatique, comportant un couvercle (6) solidaire du châssis et un piston plongeur (8) fixé à une extrémité postérieure d'un bras longitudinal (3), ainsi qu'un soufflet de roulement (7) agencé entre le couvercle (6) et le piston plongeur (8), dans lequel le piston plongeur (8) constitué en matière plastique, de préférence en matière plastique renforcée de fibres de verre, et réalisé ouvert vers le bas peut être fixé sur le bras longitudinal et comprend une surface enveloppe (8a) depuis laquelle des nervures (8b) s'étendent sensiblement radialement vers le milieu du piston plongeur (8), une plaque de maintien (11) étant mise en place ou intégrée du côté bras longitudinal dans le piston plongeur et étant destinée à recevoir des organes de fixation (9) pour fixer le piston plongeur (8) sur le bras longitudinal (3), **caractérisé en ce que** le soufflet de roulement (7) peut être fixé sur le piston plongeur (8) par un couvercle (13) disposé à l'extrémité du côté du soufflet de roulement du piston plongeur (8), **en ce qu'**un corps de soutien (10) central peut être mis en place dans le profilé du piston plongeur pour recevoir le poids lorsque le ressort pneumatique est purgé, et relie l'un à l'autre le couvercle (13) dans l'état mis en place et la plaque de maintien (11), **en ce que** le piston plongeur (8) peut être fixé directement sur le bras longitudinal (3), de manière telle que la face inférieure de la plaque de maintien (11) et les surfaces frontales, orientées vers le bras longitudinal, de la surface enveloppe (8a) et des nervures(8b) forment un plan.

2. Ressort pneumatique selon la revendication 1, **caractérisé en ce que** le piston plongeur (8) est réalisé sous la forme d'un profilé extrudé.

3. Ressort pneumatique selon la revendication 1, **caractérisé en ce que** le piston plongeur (8) est réalisé sous forme de pièce moulée, de préférence de pièce moulée par injection.
